# EUROPÄISCHE PATENTANMELDUNG

(11) **EP 2 505 415 A2**
(43) Veröffentlichungstag der Anmeldung: **03.10.2012**
(21) Anmeldenummer: 12158520.2
(22) Anmeldetag: 08.03.2012
(51) Int. Cl.: B60L 3/00

(54) **Vorrichtung und Verfahren zum sicheren Fahr-, Lade- und Rückspeisebetrieb eines Elektrofahrzeugs**

(30) Priorität: 30.03.2011 DE 202011004515 U; 12.10.2011 DE 102011084362
(71) Anmelder: Bender GmbH & Co. KG, 35305 Grünberg (DE)
(72) Erfinder: Sellner, Harald, 35305 Grünberg (DE); Möll, Winfried, 35321 Laubach (DE); Oehler, Matthias, 35112 Fronhausen (DE); Hofheinz, Wolfgang, 35305 Grünberg (DE)
(74) Vertreter: advotec.

(57) **Zusammenfassung**

Die Erfindung betrifft ein Verfahren und eine elektrische Schutz- und Überwachungseinrichtung mit einem Isolations- und einem Differenzstromüberwachungsgerät in einem Elektrofahrzeug zum sicheren Fahrbetrieb sowie zum sicheren Lade- und Rückspeisebetrieb des Elektrofahrzeugs an einer Ladestation.

Weiterhin betrifft die Erfindung eine Vorrichtung zum sicheren Lade- und Rückspeisebetrieb eines Elektrofahrzeugs an einer Ladestation mit elektrischen Schutz- und Überwachungseinrichtungen.

## Beschreibung

Die Erfindung betrifft eine elektrische Schutz- und Überwachungseinrichtung mit einem Isolationsüberwachungsgerät in einem Elektrofahrzeug zum sicheren Fahrbetrieb sowie zum sicheren Lade- und Rückspeisebetrieb des Elektrofahrzeugs an einer Ladestation.

Des Weiteren betrifft die Erfindung ein Verfahren zum sicheren Fahrbetrieb eines Elektrofahrzeugs mit einer elektrischen Schutz- und Überwachungseinrichtung sowie zum sicheren Lade- und Rückspeisebetrieb des Elektrofahrzeugs an einer Ladestation, wobei im Fahrbetrieb eine Isolationsüberwachung zur Überwachung des Isolationswiderstands zwischen den aktiven Leitern des Energiebordnetzes und dem Fahrzeug-Chassis erfolgt.

Weiterhin betrifft die Erfindung eine Vorrichtung zum sicheren Lade- und Rückspeisebetrieb eines Elektrofahrzeugs an einer Ladestation mit elektrischen Schutz- und Überwachungseinrichtungen.

Im Zuge der fortschreitenden Entwicklung zur Elektromobilität rücken auch die Betrachtungen zur elektrischen Sicherheit immer mehr in den Vordergrund. Dies betrifft zum einen das elektrische Gefährdungspotential, das direkt von dem fahrzeugeigenen Energieversorgungsnetz ausgeht. Dieses Energiebordnetz ist bei künftigen Elektrofahrzeugen in der Regel als isoliert aufgebautes Gleichspannungssystem (Hochvoltsystem) ausgelegt, das die Hochvoltverbraucher mit Energie versorgt. Isolationsfehler können zu Anlagenschäden führen und hohe Berührungsspannungen hervorrufen, die Personen gefährden. Da die elektrischen Energiespeicher des Elektrofahrzeugs regelmäßig aufgeladen werden, sind zum anderen auch die Risiken zu beachten, die während des Ladevorgangs der elektrischen Energiespeicher an einer Ladestation bestehen. Eine Ladestation kann sich dabei im häuslichen Bereich befinden oder es kann sich um öffentlich zugängliche Ladestationen handeln. Demzufolge sind auch die Netzformen der die Ladestation speisenden Stromversorgungsnetze und daraus folgend die Lade-Betriebsarten unterschiedlich. So existieren ausgehend von geerdeten und ungeerdeten Stromversorgungssystemen verschiedene Betriebsarten wie beispielsweise das einphasige und dreiphasige Laden mit Wechsel- oder Gleich-Ladeströmen in unterschiedlicher Stärke. Zudem sind Ladestationen in Planung, die die Möglichkeit der Energierückspeisung von dem mobilen Energiespeicher des Elektrofahrzeugs in das stationäre Stromversorgungsnetz erlauben.

Aus dem Aufeinandertreffen verschiedener Netzformen des Stromversorgungsnetzes und dem Gleichspannungsnetz im Elektrofahrzeug ergeben sich vielfältige Anforderungen an die elektrische Sicherheit für das Gesamtsystem Ladestation - Fahrzeug. Bisher wurde diesen sicherheitstechnischen Herausforderungen mit Einzelmaßnahmen begegnet, die jeweils getrennt im Elektrofahrzeug und in der Ladestation implementiert werden. So sind für stationäre Stromversorgungsnetze Isolationsüberwachungs- und Fehlerstromschutzeinrichtungen hinreichend bekannt und bewährt. Ebenso sind Isolationsüberwachungsgeräte für HybridFahrzeuge vorgeschlagen worden, die deren Hochvoltsystem auf das

Isolationsniveau hin überwachen.

Probleme tauchen insbesondere dann auf, wenn das Elektrofahrzeug zum Lade- oder Rückspeisebetrieb mit der Ladestation verbunden wird. Infolge der elektrischen Verbindung zwischen Elektrofahrzeug und Ladesäule entsteht aus dem zuvor ungeerdeten (IT-) Netz des Elektrofahrzeugs im Verbund mit einem stationären geerdetem (TN-) Stromnetz ein übergreifendes geerdetes Netz mit Wechsel- und Gleichspannungskomponenten. Dieses gemeinsame Netz wird in der Regel durch eine in der Ladestation angebrachte Fehlerstromschutzeinrichtung (RCD - Residual Current Device) vom Typ A überwacht, die Fehlerwechselströme und pulsierende Fehlergleichströme erfasst und nur für reine Fehlergleichströme bis maximal 6 mA zugelassen ist, da es bei höheren Fehlergleichströmen zu Beeinträchtigungen der Funktionalität kommen kann. Bei der Einspeisung von Prüfströmen durch das fahrzeugseitige Isolationsüberwachungsgerät können aber (Fehler-) Gleichströme auftreten, die die normativ festgelegte Grenze eines maximal zulässigen Fehlergleichstroms von 6 mA überschreiten und somit die Funktion der ladeseitigen Fehlerstromschutzeinrichtung beeinträchtigen können. Bei "unbekannten" Steckdosen besteht zudem Ungewissheit, ob in der Elektroinstallation eine Fehlerstrom-Schutzeinrichtung vorhanden ist oder ob der entsprechende Schutz bei Fehlergleichströmen gewährleistet ist.

Als Nachteil bei den bekannten Schutzmaßnahmen erweist sich somit, dass diese nicht in vollem Umfang die Besonderheiten der jeweiligen Netzformen miteinbeziehen und daher nicht die Möglichkeiten eines umfassenden elektrischen Schutzes gegen elektrischen Schlag, insbesondere im Lade- und Rückspeisebetrieb des Elektrofahrzeugs an einer Ladestation, ausschöpfen.

Der vorliegenden Erfindung liegt somit die Aufgabe zu Grunde, bestehende elektrische Schutz- und Überwachungseinrichtungen im Hinblick auf einen sicheren Betrieb, insbesondere einen sicheren Lade- und Rückspeisebetrieb des Elektrofahrzeugs an einer Ladestation weiterzuentwickeln und darüber hinaus eine universell einsetzbare Vorrichtung mit elektrischen Schutz- und Überwachungseinrichtungen für Elektrofahrzeuge zu schaffen, die ein umfassendes Schutzkonzept verwirklicht und so möglichst vielen Betriebsarten einschließlich der Rückspeisung gerecht wird.

Diese Aufgabe wird in Verbindung mit dem Oberbegriff des Anspruchs 1 dadurch gelöst, dass die elektrische Schutz- und Überwachungseinrichtung in dem Elektrofahrzeug ein Differenzstromüberwachungsgerät aufweist.

Der Vorteil des in dem Elektrofahrzeug angeordneten Differenzstromüberwachungsgerätes besteht darin, dass die Fehlerstromüberwachung des gesamten Ladesystems, also des durch Ankopplung des Elektrofahrzeugs an die Ladestation entstandenen geerdeten Gesamtstromnetzes von dem fahrzeugeigenen Differenzstromüberwachungsgerät übernommen wird. Dies kann unabhängig von der in der Ladestation üblicherweise verbauten Fehlerstrom-Schutzeinrichtung (Typ A) geschehen. Das Differenzstromüberwachungsgerät in dem Elektrofahrzeug ist auch dazu geeignet, beim Anschließen des Elektrofahrzeugs an eine "unbekannte" Steckdose eine Unterbrechung des Ladevorgangs beim Auftreten von Fehlerströmen zu bewirken.

In vorteilhafter Weise sind das Isolationsüberwachungsgerät und das Differenzstromüberwachungsgerät in einer baulichen Einheit integriert als Kombi-Überwachungsgerät ausgebildet. Die Integration als Kombi-Überwachungsgerät erlaubt es, die beiden Schutzmechanismen der Isolationsüberwachung und der Differenzstromüberwachung sowohl funktional als auch schaltungstechnisch aufeinander abzustimmen und somit einen sicheren Lade- und Rückspeisebetrieb des Elektrofahrzeugs an der Ladestation zu gewährleisten.

Vorzugsweise weist das Kombi-Überwachungsgerät mindestens eine Kommunikationsschnittstelle auf, mit der im Elektrofahrzeug vorhandene Schalteinrichtungen angesteuert werden können. Neben der Anbindung an das Energiebordnetz des Fahrzeugs ermöglicht diese Kommunikationsschnittstelle auch den Anschluss von Sensoren und Aktoren sowie die Integration des Kombi-Überwachungsgerätes in den Verbund der mit Bussystemen vernetzten Steuergeräte. Zu diesem Zweck ist die Kommunikationsschnittstelle als PWM-(Pulsweitenmodulations-)Ausgang, Relaisausgang, Open-Collector-Ausgang oder Bus-Schnittstelle ausgeführt.

Um bei Überschreiten eines bestimmten Fehlerstromwertes das Fahrzeug von dem Stromversorgungsnetz zu trennen, weist die elektrische Schutz- und Überwachungseinrichtung eine fahrzeugeigene Schalteinrichtung zur Trennung des Energiebordnetzes von der Ladestation auf. Über diese Schalteinrichtung kann auch der Lade-/Rückspeisevorgang gesteuert werden.

In weiterer zweckmäßiger Ausgestaltung ist das Differenzstromüberwachungsgerät zur allstromsensitiven Erfassung von Fehlerströmen ausgelegt (Typ B), um neben Fehlerwechselströmen und pulsierenden Fehlergleichströmen auch reine Fehlergleichströme erfassen zu können. Dabei ist die Schaltung derart ausgeführt, dass auch höherfrequente Fehlerwechselströme im Bereich von 20 kHz erkannt werden.

Eine hohe Betriebssicherheit wird dadurch gewährleistet, dass das Kombi-Überwachungsgerät eine Einheit zur Selbstüberwachung aufweist, die permanent die Funktion des Gerätes überprüft.

Bezogen auf das Verfahren wird die Aufgabe in Verbindung mit dem Oberbegriff des Anspruchs 9 dadurch gelöst, dass bei mit der Ladestation verbundenem Elektrofahrzeug eine aus der Isolationsüberwachung und einer Differenzstromüberwachung bestehende kombinierte Überwachung erfolgt, die in dem Elektrofahrzeug ausgeführt wird und das gesamte aus Elektrofahrzeug, Ladestation und Ladekabel bestehende Ladesystem überwacht und im Fahrbetrieb die Differenzstromüberwachung deaktiviert ist.

Die erfindungsgemäße Überwachung des gesamten Ladesystems durch die elektrische Schutz- und Überwachungseinrichtung des Elektrofahrzeugs erlaubt einen sicheren Lade- und Rückspeisebetrieb an "unbekannten" Steckdosen, insbesondere an Steckdosen, die nicht über eine Fehlerstrom-Schutzeinrichtung verfügen.

In einer vorteilhaften Ausführung des Verfahrens ermittelt die Isolationsüberwachung bei mit der Ladestation verbundenem Elektrofahrzeug einen Isolationswiderstand des Fahrzeugs vor dem Aufschalten der Ladestation, worauf der Lade-/Rückspeisevorgang nur bei hinreichend großem Isolationswiderstand freigegeben wird. Nach der Freigabe des Lade-/Rückspeisevorgangs erfolgt eine Abschaltung des Isolationsüberwachungsgerätes im Elektrofahrzeug, wobei die Differenzstromüberwachung während des Lade /Rückspeisebetriebs einen Fehlerstrom des Ladesystems überwacht und bei Überschreiten eines bestimmten Fehlerstromwertes das Elektrofahrzeug von der Ladestation getrennt wird.

Um vor Beginn des Lade-/Rückspeisevorgangs eine mögliche Gefährdung auszuschließen, prüft das in dem Elektrofahrzeug angeordnete Isolationsüberwachungsgerät zunächst den Isolationswiderstand des Fahrzeugs und gibt den Lade-/Rückspeisevorgang erst bei hinreichend großem Isolationswiderstand durch Aufschalten des Stromversorgungsnetzes frei. Das so entstandene übergreifende TN-Netz wird dann bei abgeschaltetem Isolationsüberwachungsgerät während des Lade /Rückspeisebetriebs durch das Differenzstromüberwachungsgerät des Elektrofahrzeugs auf mögliche Fehlerströme überwacht. Überschreitet der Fehlerstrom im Fehlerfall einen bestimmten, voreingestellten Fehlerstromwert, so wird das Fahrzeug automatisch vom Stromnetz getrennt.

In zweckmäßiger Weise kann dabei, je nach Anordnung eines mit dem Differenzstromüberwachungsgerät gekoppelten Messstromwandlers, der Fehlerstrom als Differenzstrom oder als Schutzleiterstrom erfasst werden, wobei die Differenzstromüberwachung allstromsensitiv erfolgt. Weiterhin kann der Differenz-Wechselstrom im Rückspeisebetrieb überwacht werden.

In Verbindung mit der Überwachung des Isolationswiderstandes vor Beginn des Lade-/Rückspeisevorgangs wird bei Unterschreiten eines Ansprechwertes für den Isolationswiderstand vorzugsweise eine Warnmeldung ausgegeben. Ebenso kann in diesem Fehlerfall ein Eintrag in einen Fehlerspeicher des Fahrzeugs erfolgen.

Die Ausgestaltung der Isolationsüberwachung und der Differenzstromüberwachung mit einer Kommunikationsschnittstelle ermöglicht es in vorteilhafter Weise, Fahrerinformationen auszugeben und im Fehlerfall Abschaltsignale zur Steuerung des Lade-/Rückspeisevorgangs zu erzeugen.

Die Betriebssicherheit wird durch eine permanente Selbstüberwachung der Isolationsüberwachung und der Differenzstromüberwachung gewährleistet.

Die der Erfindung zu Grunde liegende Aufgabe wird weiterhin in Verbindung mit dem Oberbegriff des Anspruchs 17 dadurch gelöst, dass die elektrischen Schutz- und Überwachungseinrichtungen als fahrzeugbezogene Einrichtung in dem Elektrofahrzeug und als ladestationbezogene Einrichtungen in der Ladestation und/oder dem Ladekabel angeordnet sind.

Die erfindungsgemäße Vorrichtung besteht in einer Zusammenführung aus Schutzeinrichtungen, die die elektrische Sicherheit des Fahrzeugs gewährleisten, mit Schutzeinrichtungen, die die elektrische Sicherheit der Ladestation garantieren. Durch die erfindungsgemäße Zusammenführung der in dem Elektrofahrzeug angeordneten Schutzeinrichtungen (fahrzeugbezogen) mit den Schutzeinrichtungen, die in der Ladestation und in dem Ladekabel angeordnet sind (ladestationbezogen), zu einem erfindungsgemäßen übergreifenden elektrischen Sicherheitssystem, ergibt sich die Möglichkeit, deren Zusammenwirken im Sinne einer verbesserten elektrischen Sicherheit zum Schutz gegen elektrischen Schlag effektiver zu nutzen und auch die Rückspeisung der Energie von dem Elektrofahrzeug in das stationäre Stromversorgungsnetz mit in die Sicherheitsüberlegungen einzubeziehen.

In vorteilhafter Weise ist die fahrzeugbezogene elektrische Schutz- und Überwachungseinrichtung nach einem der Ansprüche 1 bis 8 ausgebildet. Hierdurch ergeben sich im Lade- und Rückspeisebetrieb die oben für die fahrzeugbezogene elektrische Schutz- und Überwachungseinrichtung genannten Vorteile auch in einem übergreifenden Sicherheitskonzept für das gesamte Ladesystem. Insbesondere ein in dem Elektrofahrzeug verbautes Differenzstromüberwachungsgerät, verbunden mit der allstromsensitiven Erfassung von Fehlerströmen, erhöht die Sicherheit im Lade- und Rückspeisebetrieb.

Durch die Auslegung der elektrischen Schutz- und Überwachungseinrichtungen in dem gesamten aus Elektrofahrzeug, Ladestation und Ladekabel bestehenden Ladesystem für unterschiedliche, normativ festgeschriebene, Lade-Betriebsarten (Lade-Modi) und für die Rückspeisung ergibt sich eine universelle Einsetzbarkeit der Vorrichtung.

Bevorzugt weisen die ladestationbezogenen Schutzeinrichtungen ein Isolationsüberwachungsgerät auf. Bei einem Ladevorgang kann dieses Isolationsüberwachungsgerät die Funktion des fahrzeugeigenen Isolationsüberwachungsgerätes übernehmen und vor dem Aufschalten des Ladestroms das gesamte angeschlossene System bestehend aus Ladestation, Ladekabel und Elektrofahrzeug auf den Isolationswiderstand hin überprüfen. Bei angedocktem Elektrofahrzeug kann durch den integrierten Aufbau der erfindungsgemäßen Vorrichtung die Funktion des fahrzeugeigenen Isolationsüberwachungsgerätes von einer gleichartigen ladestationbezogenen Schutzeinrichtung übernommen werden.

Weiterhin umfassen die ladestationbezogenen Schutzeinrichtungen zweckmäßigerweise ein Differenzstromüberwachungsgerät. Diese Differenzstromüberwachungseinrichtung kontrolliert den Differenzstrom ladestationsseitig und veranlasst die Abschaltung der Ladestation, sobald der Differenzstrom einen vorher definierten Ansprechwert überschreitet.

In weiterer vorteilhafter Ausgestaltung weist die Vorrichtung auf Seiten der Ladestation einen elektronisch gesteuerten wiedereinschaltbaren Schutzschalter auf, der die Verbindung der Ladestation zu dem stationären Stromleitungsnetz auftrennen kann. Der Schutzschalter löst aus bei einer Überlast oder bei Erkennung eines zu hohen, von dem ladestationbezogenen Differenzstrommessgerät erkannten Differenzstrom. Mit Vorteil kann - sofern kein Fehler höherer Priorität vorliegt - eine Wiederzuschaltung nach erfolgreicher Freigabe durch das Isolationsüberwachungsgerät erfolgen. Ein Wiederzuschalten ist insbesondere dann von Bedeutung, wenn sich das Isolationsniveau des Fahrzeugs im Grenzbereich bewegt und es während eines Ladezyklus zu einer Auslösung kommen kann.

Weiterhin weisen die ladestationbezogenen Schutzeinrichtungen ein Aufschaltrelais auf, das die eigentliche Aufschaltung der Ladestation zum Elektrofahrzeug vornimmt und im Fall der Rückspeisung bei Erkennung einer Abweichung der Einspeisespannung oder Einspeisefrequenz die Verbindung der Ladestation zum Elektrofahrzeug trennt.

Von Vorteil ist, dass die Vorrichtung ein Spannungs- und Frequenzüberwachungsgerät zur Überwachung der in ein stationäres Stromversorgungsnetz zurückzuspeisenden Leistung aufweist. Dieses Gerät kontrolliert die Einhaltung definierter Grenzwerte für die bestimmenden Parameter des rückzuspeisenden Energieflusses. Bei Überschreiten dieser Grenzwerte wird die Rückspeisung unterbrochen und das Fahrzeug von der Ladestation getrennt.

In einer weiteren vorteilhaften Ausgestaltung sind Funktionen der fahrzeugbezogenen Schutzeinrichtungen und der ladestationbezogenen Schutzeinrichtungen sowie der Überwachungseinrichtungen in einer Kontrolleinrichtung verbaut, die in eine Leitungsverbindung zwischen Ladestation und Elektrofahrzeug integriert ist. Die vorgenannten Schutzfunktionen der erfindungsgemäßen Vorrichtung können somit in wesentlichen Teilen in einer kompakten baulichen Einheit realisiert sein, die von dem Ladekabel aufgenommen werden kann. Dabei ist auch vorgesehen, dass funktionsgleiche Schutzeinrichtungen, z.B. das fahrzeugbezogene und das ladestationbezogene Differenzstromüberwachungsgerät, in einem Gerät zusammengeführt werden.

Weitere vorteilhafte Ausgestaltungsmerkmale ergeben sich aus der nachfolgenden Beschreibung und den Zeichnungen, die bevorzugte Ausführungsformen der Erfindung an Hand von Beispielen erläutern. Es zeigen:
- **Fig. 1**: ein funktionales Blockschaltbild einer erfindungsgemäßen elektrischen Schutz- und Überwachungseinrichtung in einem Elektrofahrzeug,
- **Fig. 2**: ein funktionales Blockschaltbild eines Kombi-Überwachungsgeräts,
- **Fig. 3**: ein funktionales Blockschaltbild der ladestationbezogenen Schutzeinrichtungen,

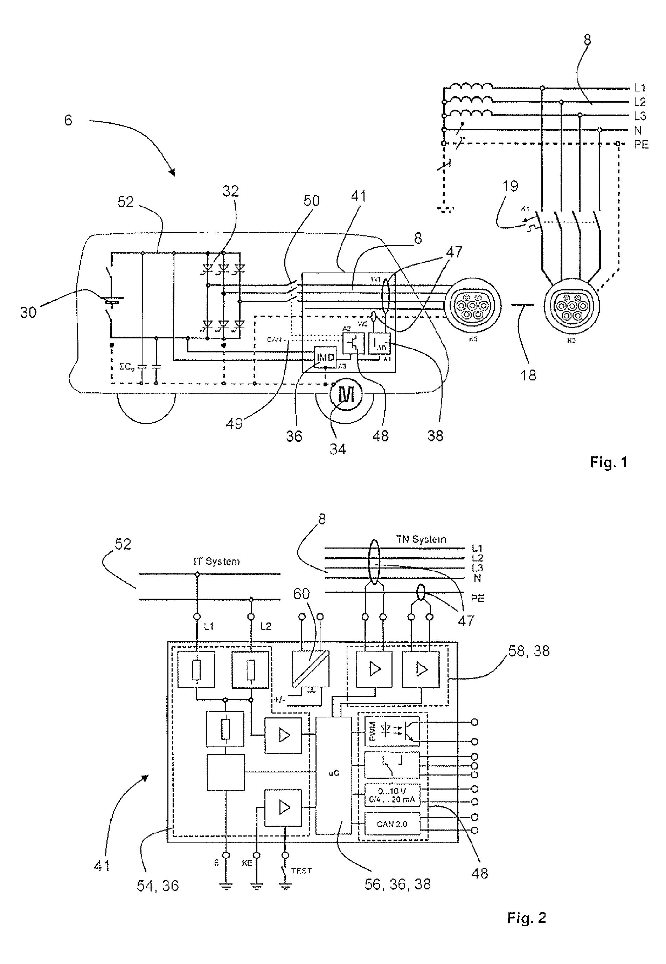

**Fig. 1** zeigt ein funktionales Blockschaltbild einer erfindungsgemäßen elektrischen Schutz- und Überwachungseinrichtung in einem Elektrofahrzeug 6.

Das Elektrofahrzeug 6 weist als wesentliche elektrische Antriebskomponenten einen aufladbaren Energiespeicher 30, einen Elektromotor 34 sowie zu dessen Ansteuerung einen Umrichter 32 auf. Als Schutz- und Überwachungseinrichtung sind ein Isolationsüberwachungsgerät 36 und ein Differenzstromüberwachungsgerät 38 dargestellt.

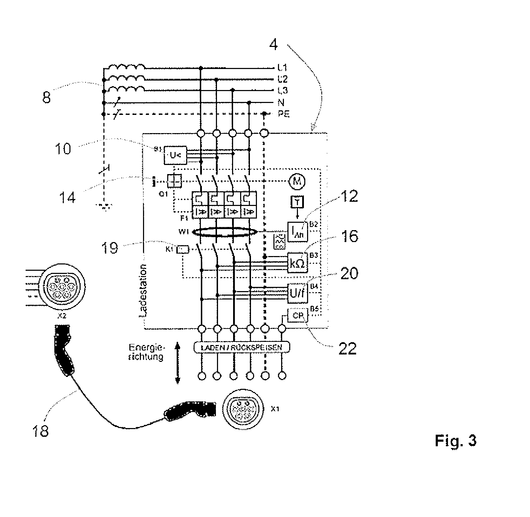

Im Fahrbetrieb ermittelt das Isolationsüberwachungsgerät 36 mögliche Isolationsfehler des Energiebordnetzes im Elektrofahrzeug 6 durch Messung des Isolationswiderstands und veranlasst im Fehlerfall einen Eintrag in einen Fehlerspeicher und/oder gibt eine für den Fahrer wahrnehmbare Warnmeldung, beispielsweise in Form eines akustischen oder optischen Signals, aus. Befindet sich das Elektrofahrzeug während des Lade-/Rückspeisebetriebs an einem Stromversorgungsnetz 8 oder an einer speziellen Ladestation 4 (**Fig. 3**), so misst das Isolationsüberwachungsgerät 36 vor dem Aufschalten des Stromversorgungsnetzes 8 den Isolationswiderstand des gesamten Ladesystems einschließlich des Elektrofahrzeugs 6 und eines Ladekabels 18 (**Fig. 3**). Wird ein zulässiger, hinreichend großer Wert des Isolationswiderstands, von z.B. 1 MOhm, ermittelt, wird die Ladung freigegeben. Nach dem Aufschalten des Stromversorgungsnetzes 8 bzw. der Ladestation 4 wird das Isolationsüberwachungsgerät 16 abgeschaltet und hochohmig gesetzt (> 1 MOhm nach Erde).

Das Isolationsüberwachungsgerät 36 und das Differenzstromüberwachungsgerät 38 sind in einer baulichen Einheit integriert als Kombi-Überwachungsgerät 41 ausgebildet. An das Kombi-Überwachungsgerät 41 sind Messstromwandler 47 zur Erfassung der Fehlerströme auf der angekoppelten Stromversorgungsleitung 8 angeschlossen; zur Messung des Isolationswiderstands ist das Kombi-Überwachungsgerät 41 mit dem Energiebordnetz 52 verbunden. Weiterhin weist das Kombi-Überwachungsgerät 41 eine Kommunikationsschnittstelle 48 auf, die einen Ausgang zur Ansteuerung einer fahrzeugeigenen Schalteinrichtung 50 besitzt. Mittels dieser Schalteinrichtung 50 kann, insbesondere im Fehlerfall bei Überschreiten eines maximal zulässigen Fehlerstroms, das Energiebordnetz von der Ladestation 4 getrennt werden. Eine weitere Möglichkeit der Trennung vom Stromnetz 8 ist durch ein netzseitig angeordnetes Abschaltrelais 19 gegeben, das über eine in dem Ladekabel 18 geführte Steuerleitung von dem Kombi-Überwachungsgerät 41 angesteuert wird. Als weiteren Ausgang besitzt die Kommunikationsschnittstelle 48 des Kombi-Überwachungsgeräts 41 eine CAN-Bus-Schnittstelle zur Vernetzung mit einem Fahrzeugbussystem 49.

**Fig. 2** zeigt ein funktionales Blockschaltbild des Kombi-Überwachungsgeräts 41. Das Kombi-Überwachungsgerät 41 ist zur Messung des Isolationswiderstandes an das fahrzeugeigene IT-Netz (Energiebordnetz) 52 und zur Erfassung von Fehlerströmen an das externe Stromversorgungsnetz 8 angeschlossen ist. Die Isolationswiderstandsmessung erfolgt mit dem integrierten Isolationsüberwachungsgerät 36, das aus einem Ankopplungs- und Messnetzwerk mit Prüfstromgenerator und Verstärkerschaltungen 54 sowie einem Mikroprozessor 56 besteht. Die Erfassung der Fehlerströme geschieht mit dem integrierten Differenzstromüberwachungsgerät 38, das ebenfalls den Mikroprozessor 56 umfasst und über Messstromwandler 47 mit Verstärkerschaltungen 58, getrennt für die Leiter L1, L2, L3, N einerseits und für die Erdverbindung PE andererseits, mögliche Fehlerströme in dem angekoppelten Abschnitt des Stromversorgungsnetzes 8 ermittelt.

Die Kommunikationsschnittstelle 48 des Kombi-Überwachungsgeräts 41 weist einen PWM-Ausgang, einen Relaisausgang, einen Open-Collector-Ausgang und eine CAN-Bus-Schnittstelle auf. Zur eigenen Spannungsversorgung ist das Kombi-Überwachungsgerät 41 mit einem Netzteil 60 versehen.

**Fig. 3** zeigt ein funktionales Blockschaltbild der ladestationbezogenen Schutz- und Überwachungseinrichtungen. Die bidirektionale Ladestation 4 für Elektrofahrzeuge 6 wird über das geerdete 3-phasige Stromversorgungsnetz 8 gespeist, dessen Spannung mit einer Überwachungsschaltung 10 in der Ladestation 4 kontrolliert wird. Ein Differenzstromüberwachungsgerät 12 in der Ladestation 4 erfasst im Fehlerfall einen Differenzstrom und bewirkt mittels eines elektronisch gesteuerten wiedereinschaltbaren Schutzschalters 14 eine Trennung der Ladestation 4 von dem Stromversorgungsnetz 8.

Alternativ zu dem in dem Elektrofahrzeug 6 (**Fig. 1**) befindlichen Isolationsüberwachungsgerät 36 (**Fig. 1**) kann ein Isolationsüberwachungsgerät 16 in der Ladestation 4 bei einem an die Ladestation 4 angeschlossenen Elektrofahrzeug 6 vor dem Aufschalten des Stromversorgungsnetzes 8 den Isolationswiderstand des Ladesystems prüfen.

Ein Aufschaltrelais 19 nimmt die Aufschaltung der Ladestation 4 vor und trennt die Verbindung im Fall der Rückspeisung bei Erkennung einer unzulässigen Abweichung der Einspeisespannung oder Einspeisefrequenz. Für den Fall der Rückspeisung der Energie von dem Elektrofahrzeug 6 über die Ladestation 4 in das stationäre Stromversorgungsnetz 8 wird die Einhaltung definierter Grenzwerte für die Spannung und Frequenz der rückzuspeisenden Energie durch ein Spannungs- und Frequenzüberwachungsgerät 20 kontrolliert. Damit ist sichergestellt, dass die einzuspeisende Wechselspannung entsprechend den Anforderungen des Stromversorgungsnetzes 8 bereitgestellt wird. Als zusätzliche normative Vorgabe umfasst die Ladestation 4 eine Steuersignaleinrichtung 22, über die den Ladevorgang betreffende Steuer- und Kontrolldaten zwischen Ladestation 4 und Elektrofahrzeug 6 ausgetauscht werden.

## Patentansprüche

1. Elektrische Schutz- und Überwachungseinrichtung in einem Elektrofahrzeug (6) zum sicheren Fahrbetrieb sowie zum sicheren Lade- und Rückspeisebetrieb des Elektrofahrzeugs (6) an einer Ladestation (4), mit einem Isolationsüberwachungsgerät (36)
**gekennzeichnet durch**
ein Differenzstromüberwachungsgerät (38) in dem Elektrofahrzeug (6).

2. Elektrische Schutz- und Überwachungseinrichtung nach Anspruch 1,
**dadurch gekennzeichnet,**
**dass** das Isolationsüberwachungsgerät (36) und das Differenzstromüberwachungsgerät (38) in einer baulichen Einheit integriert als Kombi-Überwachungsgerät (41) ausgebildet sind.

3. Elektrische Schutz- und Überwachungseinrichtung nach Anspruch 1 oder 2,
**dadurch gekennzeichnet,**
**dass** das Kombi-Überwachungsgerät (41) mindestens eine Kommunikationsschnittstelle (48) aufweist, mit der im Elektrofahrzeug (6) vorhandene Schalteinrichtungen (50) angesteuert werden können.

4. Elektrische Schutz- und Überwachungseinrichtung nach Anspruch 3,
**dadurch gekennzeichnet,**
**dass** die Kommunikationsschnittstelle (48) als PWM-Ausgang, Relaisausgang, Open-Collector-Ausgang oder Bus-Schnittstelle ausgeführt ist.

5. Elektrische Schutz- und Überwachungseinrichtung nach einem der Ansprüche 1 bis 4,
**gekennzeichnet durch**
eine Schalteinrichtung (50) zur Trennung des Energiebordnetzes (52) von der Ladestation (4).

6. Elektrische Schutz- und Überwachungseinrichtung nach einem der Ansprüche 1 bis 5,
**dadurch gekennzeichnet,**
**dass** das Differenzstromüberwachungsgerät (38) zur allstromsensitiven Erfassung von Fehlerströmen ausgelegt ist.

7. Elektrische Schutz- und Überwachungseinrichtung nach einem der Ansprüche 1 bis 6,
**gekennzeichnet durch**
eine Schaltungsauslegung zur Erkennung von höherfrequenten Fehlerströmen.

8. Elektrische Schutz- und Überwachungseinrichtung nach einem der Ansprüche 2 bis 7,
**dadurch gekennzeichnet,**
**dass** das Kombi-Überwachungsgerät (41) eine Einheit zur Selbstüberwachung aufweist.

9. Verfahren zum sicheren Fahrbetrieb eines Elektrofahrzeugs (6) mit einer elektrischen Schutz- und Überwachungseinrichtung sowie zum sicheren Lade- und Rückspeisebetrieb des Elektrofahrzeugs an einer Ladestation (4), wobei im Fahrbetrieb eine Isolationsüberwachung (36) zur Überwachung des Isolationswiderstands zwischen den aktiven Leitern des Energiebordnetzes (52) und dem Fahrzeug-Chassis erfolgt,
**dadurch gekennzeichnet,**
**dass**
- bei mit der Ladestation verbundenem Elektrofahrzeug eine aus der Isolationsüberwachung (36) und einer Differenzstromüberwachung (38) bestehende kombinierte Überwachung (41) erfolgt, die in dem Elektrofahrzeug (6) ausgeführt wird und das gesamte aus Elektrofahrzeug (6), Ladestation (4) und Ladekabel (18) bestehende Ladesystem überwacht,
- im Fahrbetrieb die Differenzstromüberwachung (38) deaktiviert ist.

10. Verfahren nach Anspruch 9,
**dadurch gekennzeichnet,**
**dass** bei mit der Ladestation (4) verbundenem Elektrofahrzeug (6)
- die Isolationsüberwachung (36) einen Isolationswiderstand des Fahrzeugs (6) vor dem Aufschalten der Ladestation (4) ermittelt,
- der Lade-/Rückspeisevorgang nur bei hinreichend großem Isolationswiderstand freigegeben wird,
- nach der Freigabe des Lade-/Rückspeisevorgangs eine Abschaltung des Isolationsüberwachungsgerätes (36) im Elektrofahrzeug (6) erfolgt,
- die Differenzstromüberwachung (38) während des Lade-/Rückspeisebetriebs einen Fehlerstrom des Ladesystems überwacht,
- bei Überschreiten eines bestimmten Fehlerstromwertes das Elektrofahrzeug (6) von der Ladestation (4) getrennt wird.

11. Verfahren nach Anspruch 10,
**dadurch gekennzeichnet,**
**dass** der Fehlerstrom als Differenzstrom oder als Schutzleiterstrom erfasst wird.

12. Verfahren nach einem der Ansprüche 9 bis 11,
**dadurch gekennzeichnet,**
**dass** die Differenzstromüberwachung (38) allstromsensitiv erfolgt.

13. Verfahren nach einem der Ansprüche 9 bis 12,
**dadurch gekennzeichnet,**
**dass** bei Unterschreiten eines Ansprechwertes für den Isolationswiderstand eine Warnmeldung ausgegeben wird.

14. Verfahren nach einem der Ansprüche 9 bis 13,
**dadurch gekennzeichnet,**
**dass** bei Unterschreiten eines Ansprechwertes für den Isolationswiderstand ein Eintrag in einen Fehlerspeicher des Fahrzeugs (6) erfolgt.

15. Verfahren nach einem der Ansprüche 9 bis 14,
**dadurch gekennzeichnet,**
**dass** die Isolationsüberwachung (36) und die Differenzstromüberwachung (38) Fahrerinformationen ausgeben und im Fehlerfall Abschaltsignale erzeugen.

16. Verfahren nach einem der Ansprüche 9 bis 15,
**dadurch gekennzeichnet,**
**dass** die Isolationsüberwachung (36) und die Differenzstromüberwachung (38) eine Selbstüberwachung durchführen.

17. Vorrichtung zum sicheren Lade- und Rückspeisebetrieb eines Elektrofahrzeugs (6) an einer Ladestation (4), mit elektrischen Schutz- und Überwachungseinrichtungen,
**dadurch gekennzeichnet,**
**dass** die elektrischen Schutz- und Überwachungseinrichtungen als fahrzeugbezogene Einrichtung in dem Elektrofahrzeug (6) und als ladestationbezogene Einrichtungen in der Ladestation (4) und/oder dem Ladekabel (18) angeordnet sind.

18. Vorrichtung nach Anspruch 17,
**dadurch gekennzeichnet,**
**dass** die fahrzeugbezogene elektrische Schutz- und Überwachungseinrichtung nach einem der Ansprüche 1 bis 8 ausgebildet ist.

19. Vorrichtung nach Anspruch 17 oder 18,
**dadurch gekennzeichnet,**
**dass** die elektrischen Schutz- und Überwachungseinrichtungen für unterschiedliche Betriebsarten einschließlich der Rückspeisung ausgelegt sind.

20. Vorrichtung nach einem der Ansprüche 17 bis 19,
**dadurch gekennzeichnet,**
**dass** die ladestationbezogenen Schutzeinrichtungen ein Isolationsüberwachungsgerät (16) aufweisen.

21. Vorrichtung nach einem der Ansprüche 17 bis 20,
**dadurch gekennzeichnet,**
**dass** die ladestationbezogenen Schutzeinrichtungen ein Differenzstromüberwachungsgerät (12) aufweisen.

22. Vorrichtung nach einem der Ansprüche 17 bis 21,
**dadurch gekennzeichnet,**
**dass** die ladestationbezogenen Schutzeinrichtungen einen elektronisch gesteuerten wiedereinschaltbaren Schutzschalter (14) aufweisen.

23. Vorrichtung nach einem der Ansprüche 17 bis 22,
**dadurch gekennzeichnet,**
**dass** die ladestationbezogenen Schutzeinrichtungen ein Aufschaltrelais (19) aufweisen.

24. Vorrichtung nach einem der Ansprüche 17 bis 23,
**gekennzeichnet durch**
ein Spannungs- und Frequenzüberwachungsgerät (20) zur Überwachung der in ein stationäres Stromversorgungsnetz (8) zurückzuspeisenden Leistung.

25. Vorrichtung nach einem der Ansprüche 17 bis 24,
**dadurch gekennzeichnet,**
**dass** Komponenten der elektrischen Schutz- und Überwachungseinrichtungen in einer Kontrolleinrichtung verbaut sind, die in eine Leitungsverbindung (18) zwischen Ladestation (4) und Elektrofahrzeug (6) integriert ist.

26. Vorrichtung nach einem der Ansprüche 17 bis 25,
**dadurch gekennzeichnet,**
**dass** die Isolationsüberwachung (16, 36), die Differenzstromüberwachung (12, 38) und die Spannungs-/Frequenzüberwachung (20) in einer baulichen Einheit integriert sind.
